# EUROPEAN PATENT APPLICATION

(11) **EP 0 939 099 A2**
(43) Date of publication of application: **01.09.1999**
(21) Application number: 99200529.8
(22) Date of filing: 24.02.1999
(51) Int. Cl.: C08J 5/24, C08J 3/24, C08L 63/00

(54) **Prepregs, comprising only one of the reactive components, and composites derived from them**

(30) Priority: 26.02.1998 EP 98200615
(71) Applicant: SHELL INTERNATIONALE RESEARCH MAATSCHAPPIJ B.V., 2596 HR Den Haag (NL)
(72) Inventor: Florizoone, Geert, 1348 Ottignies (Louvain-la-Neuve) (BE)

(57) **Abstract**

Composite, obtainable by hot pressing or vacuum bagging a multilayer of prepregs of reinforcing webs impregnated with duroplastic resin systems, wherein at least one layer of an epoxy resin prepreg and at least one layer of a prepreg comprising a curing agent and/or an adduct of an epoxy resin and a curing agent, and prepregs to be used therefore. As curing agent preferably a polyamine is used.

## Description

The invention relates to two types of different prepregs, each type of which comprises only one of the reactive components, and composites derived from them.

Composites derived from prepregs have been known to be useable to provide lightweight structural elements for space, aircraft, automotive and transportation industry, in order to save energy, to improve mechanical properties and to meet increased demands of traffic safety regulations.

Said composites consisted of several layers of resin impregnated reinforcing materials, so called prepregs, which are formed into a single unit by press curing. High demands are put on the properties of these composites with respect to strength resistance to solvents and. ageing, and weathering resistance.

By varying the reinforcement materials used and utilizing differing matrix materials a large number of different composites have been prepared each having some advantageous properties.

Advantageous properties were found with composites, which had been primarily based on duroplastic synthetics, and more preferably epoxy resins, as the matrix material, since epoxy resins showed excellent strength, good adherency on all fibres or tissues customarily used in high grade composites and a low degree of shrinkage during curing.

However, the disadvantage of such epoxy resin composites was their considerable moisture absorption and water diffusion.

Phenol resins as matrix material generally have lower mechanical capabilities than the epoxy resins, but lower moisture absorption and water vapour diffusion, and they exhibit especially more favourable behaviour in fire and lower fume density.

For this reason, epoxy resins and phenol resins in combination have already been used for printed circuit boards.

These composites have been obtained either by impregnating the reinforcement materials with a mixture of epoxy resins and phenol resins and, if necessary, another polymer as known from, for instance, JP No. 60/18531 A2 (C.A., Vol. 103: 7433 x) or by impregnating the reinforcement material first with one resin system and then with another resin system as disclosed, for instance, in JP No. 60/189987 A2 (C.A., Vol. 104: 51808 t). By using combinations of epoxy and phenol resins in this manner, the fume density of the resulting composite materials is, however, not lowered. Likewise, the improvement of moisture absorption refers only to that in cold moisture and the problem of the so-called hot-wet resistance, the resistance against warm moisture, is not solved in this way.

From e.g. US 4,839,229 was known an improved composite produced by hot pressing different types of duroplastic prepregs of reinforcing materials, one of the prepreg types comprising at least one layer of an epoxy resin and the other prepreg type comprising at least one layer of a phenolic resin prepreg respectively, to cure the resins and bond the layers to each other.

Preferably in one or both of the prepreg types the resin systems had been modified by addition of from 2 to 20 wt% of a compatible rubber or thermoplastic polymer.

Moreover according to a preferred embodiment of said process, at least one epoxy resin prepreg was pressed between at least two phenolic resin prepregs, and the phenolic resin system contained a curing agent selected from hexamethylene tetraamine and reaction products of formaldehyde and nitrogen bases.

It will be appreciated that in particular for the construction of relatively large technical composites to be used in space, aircraft, shipbuilding and automotive industries, there is a need for prepregs of resin systems, curing significally faster than the presently applied epoxy resin-novolak systems or epoxy resin-dicyanamide systems, when pressed together in the final form at relatively low temperatures and curing without additional accelerators, while the prepregs involved must show an attractive storage stability.

Therefore an object of the present invention is to provide such composites and prepreg systems aimed at.

As a result of extensive research and experimentation said composites and prepreg systems have been surprisingly found.

Accordingly the present invention relates to a composite obtainable by hot pressing or vacuum bagging a multilayer of prepregs of reinforcing webs impregnated with duroplastic resin systems, wherein at least one layer of an epoxy resin prepreg and at least one layer of a prepreg comprising a curing agent and/or an adduct of an epoxy resin and a curing agent, and to respective prepregs to be used.

Suitable epoxy resin systems for the composites of the invention are all epoxy resins based on reaction products of epichlorohydrin with bisphenol A, bisphenol F, or higher functional novolacs of phenol, cresols, xylenols and longer chain alkyl phenols, such as p-tert butylphenol or nonylphenol.

Examples of suitable curing agents are polyamines, polyacids, and more particular diacids, or anhydrides thereof and novolac resins.

Examples of the polyamines to be used in the manufacture of the coprepregs are aliphatic, cycloaliphatic, aromatic or araliphatic polyamines, having 2 to 18 carbon atoms or polyamines containing a heterocyclic ring.

Suitable examples of such polyamines are diamino diphenyl methane, m-phenylenediamine, 1,3-propylene-bis(4-aminobenzoate), hexamethylene tetraamine, m-xylene diamine, 1,6-hexane diamine, 1,2- or 1,3-diamino cyclohexane, 2,2,(4),4-trimetyl-1,6-hexane diamine, 2,4,(6)-toluene diamine, pentane diamine, 1-ethyl-1,3-propane-diamine, ethylene diamine, diethylene triamine, triethylene tetraamine, tetraethylene pentamine, pentaethylenehexamine, bis-(3-aminopropyl)amine, N,N-bis(3-aminopropyl) ethylenediamine, neopentadiamine, 2-methyl-1,5-pentanediamine-1,3-diaminopentane, 1,2-diamino-4-ethylcyclohexane, 1,4-diamino-3,6-diethyl-cyclohexane, 1-cyclohexyl-3,4-diaminocyclohexane, 4,4'-di(aminodicyclohexyl)-methane and -propane, bis(4-aminocyclohexyl)-methane and -propane, 3,3'-dimethyl-4,4'-diaminodicyclohexylmethane, 3-amino-1-cyclohexyl-aminopropane, 1,2- or 1,3- or 1,4-bis(aminomethyl)-cyclohexane, isophoron diamine and 4,4'di(anilino-methane).

Suitable examples of the polyacids and more in particular diacids, or anhydrides thereof are hexahydrophthalic acid or anhydride, nadic methyl anhydride, phthalic anhydride, methyl tetra hydrophthalic anhydride, terepthalic acid, isophthalic acid, pyromellitic anhydride, pyromellitic acid, 2,4-cyclohexanedicarboxylic acid, 1,4-cyclohexanedicarboxylic acid, 1,2-cyclohexane dicarboxylic acid.

Suitable examples of the novolac resins are straight novolacs derived from phenol and formaldehyde under acidic conditions, oil modified novolacs, alkyl modified novolacs, rosin modified phenolic resins, straight cresol novolacs, cresol modified novolacs, ortho novolacs such as available e.g. from Occidental Chemical under the trademark OXYCHEM or from BORDEN, INC. under BORDEN SD trade marks such as SD-333A; SD-461A, SD 1731A.

More preferably aliphatic or cycloaliphatic polyamines, such as isophorone amine, 4,4'-diaminocyclohexyl methane (DACM), and 1,2 or 1,3-diaminocyclohexane (DCH), are used or liquid polyacid anhydrides such as methylhexahydrophthalic anhydride or methyl tetrahydrophthalic anhydride.

Another preferred group of amine hardeners is formed by the water soluble polyoxyalkylene di- and -polyamine, having molecular weights in the range of from 100 to 2000 g/mol, such as those amines marketed under the tradename JEFFAMINE, as well as the water dispersible hardeners, which have been specified in DE-B-2332177 and EP-B-0000605.

Also Mannich bases, Epoxide-Amine-adducts, reaction products of formaldehyde and nitrogen bases, e.g. anhydroform-aldehyde aniline or other Schiff's bases, or polyamidoamine can be used as hardeners.

Suitable Mannich bases can be prepared by condensation of polyamines, preferably diethylenetriamine, triethylenetetraamine, isophoron diamine, 2,2,4- or 2,4,4-trimethyl hexamethylenediamine, 1,3- and 1,4-bis(aminomethyl)cyclohexane in particular meta- and para-xylylene diamine with aldehydes, preferably formaldehyde and mono- or polyvalent phenols, having at least a nuclear position which is able to react with aldehydes, such as the respective cresols and xylenols, para-tert-butylphenol, resorcine, 4,4'-dihydroxydiphenyl-methane, 2,2-bis-(4-hydroxyphenyl)propane, but preferably phenol.

As suitable amine-epoxide adducts can be used e.g. reaction products of polyamines, such as ethylenediamine, propylene diamine, diaminocyclohexane, isophorone diamine, hexamethylenediamine, 2,2,4- and 2,4,4-tri-methylhexamethylenediamine, meta-xylylenediamine and/or bis(aminomethyl)cyclohexane with terminal mono- or polyepoxides, such as propylene oxide, hexene oxide, cyclohexene oxide or 4,4'-methylenebis(cyclohexylamine)(PACM), 4,4'-methylenebis(aniline), or with glycidyl ethers such as phenylglycidyl ether, tert-butylglycidyl ether, ethylhexylglycidyl ether, butylglycidyl ether, or with glycidyl esters such as those available under the tradename CARDURA-E (glycidyl ester of VERSATIC acids).

Depending on the viscosity and the adherence to the reinforcing web the polyamine can be impregnated into the reinforcing web as such or in the form of a preformed adduct with an epoxy resin. However it has appeared that adducts have to be made from the preferred polyamines.

The ratio between the equivalents of epoxy groups and amino groups in the preformed adduct may vary over a wide range, provided that the final adduct on the one hand still contains sufficient free aminogroups to enable a fast reaction during curing and adhesion of the respective layers and on the other hand sufficiently adheres to the reinforcing web to be impregnated.

More preferably from 10 to 80 mol% of the available amino groups is prereacted with epoxy resin and more preferably from 20 to 50 mol%.

The respective separated prepreg types can be manufactured by methods known in the art from e.g. EP-A-0,476,752, US-A-4,767,643, DE-A-3,610,943 and US-A-4,886,684, starting from a solution or a melt of the resin to be impregnated in the reinforcing web, such as glass web, glass mat, webs of carbon fibre or of aramide fibre.

Preferably the two types of (co) prepregs are manufactured by using the process and equipment according to EP-A-0476752 and using glass web.

The separated prepregs according to the present invention have the clear advantage of a significant longer shelf live.

A more preferred combination of prepregs comprising epoxy resin on the one hand and an amine curing agent on the other hand, moreover may enable a significant faster curing and/or can be cured at lower temperatures.

An example in this connection is a prepreg of EPIKOTE 1001 resin (EPIKOTE is a trademark) with 4,4'-methylene bis(cyclohexylamine) or PACM.

If a prior art prepreg is made starting from a mixture of epoxy resin and curing agent, which is impregnated into the reinforcing web, the shelf life at 23 °C could only be about 3 hours, which is totally unattractive and not applicable in industry.

On the other hand, using a separated epoxy resin prepreg and a curing agent prepreg, derived from the same amine, the shelf life becomes almost unrestricted.

More in particular, it was found that in spite of the use of polyamine hardness, not any expected blooming did occur. It is very surprising indeed, that a uniform resin/distribution throughout the composite could be obtained under practically acceptable process conditions.

The invention is illustrated by the following examples, however without restricting its scope to these embodiments.

### Example 1

Component 1: EPIKOTE 828
Component 2: Adduct of PACM (=4,4'-methylene bis(cyclohexylamine)) and EPIKOTE 828.

100 g EPIKOTE 828 is mixed with 118 g of PACM and put for 1 hour at 150 °C. The result of this reaction is that 25 mol% of the -NH groups are reacted with epoxy groups in order to increase sufficiently the viscosity.

A laminate was pressed by making following combination:
Layer 1: Glass woven fabric impregnated with component 1.
Layer 2: Glass woven fabric impregnated with component 2.
Layer 3: Glass woven fabric impregnated with component 1.
Layer 4: Glass woven fabric impregnated with component 2.
Layer 5: Glass woven fabric impregnated with component 1.

This was put between 2 heated plates at 150 °C for 45 minutes. On the cured laminate a Tg was measured and 101 °C was found as midpoint Tg.

This proved that the principle of keeping the 2 components separated on the prepregs and curing them later on by stapling them one after the other, good mixing of the ingredients is obtained as a good Tg is reached.

### Example 2

The experiment according to Example 1 is repeated, except that PACM is replaced by isophoronediamine(5-amino-1,3,3-trimethylcyclohexane-methanamine), providing a laminate with the same Tg.

### Example 3

The experiment according to Example 1 is repeated, except that PACM is replaced by 3,3'-dimethyl-4,4'-diaminodicyclohexylmethane providing a laminate with the same Tg.

### Example 4

The experiment according to Example 1 is repeated except that PACM is replaced by 1,2-diaminocyclohexane (DCH-99), providing a laminate with the same Tg.

### Example 5

The experiment according to Example 1 is repeated except that PACM is replaced by 4,4'-diaminodiphenyl-methane (DDM), providing a laminate with the same Tg.

### Examples 6-9

The experiment existed of the impregnation of woven glass fibres with Epikote 834 and acid and phenolic curing agents.

| Examples | | | | |
|---|---|---|---|---|
| | 6 pbw | 7 pbw | 8 pbw | 9 pbw |
| Prepreg one: | | | | |
| Epikote 834: | 100 | 100 | 100 | - |
| Epikote 155: | - | - | - | 100 |
| Prepreg two: | | | | |
| MHHPA | 90 | - | - | 90 |
| MTHPA | - | 90 | - | - |
| Durez 33009 | - | - | 100 | - |
| 24EMI | 3 | 3 | 3 | 3 |
| * Durez 33009 is straight cresol novolac resin from Oxychem. | | | | |
| * MHHPA is methyl-hexa-hydroxyphthalic anhydride from Lonza. | | | | |
| * MTHPA is methyl-tetra-hydroxyphthalic anhydride from Lonza. | | | | |
| * 24EMI is 2,4 ethyl methyl imidazole from BASF. | | | | |

Six prepregs were stapled in the following way in order to make a laminate:
1st layer: prepreg one
2nd layer: prepreg two
3rd layer: prepreg one
4th layer: prepreg two
5th layer: prepreg one
6th layer: prepreg two

These prepregs were cured between 2 heated steel plates for 15 minutes at 150 °C.

The visual aspect of all laminates is good, meaning the layers adhered to each other.

A piece was cut from the middle of the laminate in order to measure a Tg.

| | [I] | [II] | [III] | [IV] |
|---|---|---|---|---|
| Tg, [°C] : | | | | |
| - first run: | 115 | 110 | 68 | 124 |
| - Second run after 30 minutes at 200 °C: | 142 | 100 | 85 | 156 |
| * Tg has been measured with a Perkin Elmer DSC at 20 °C/minute. | | | | |

Tg is recorded as "half Cp extrapolated" or midpoint Tg.

It will be appreciated that with a very short cure cycle, already relatively high Tg's are obtained.

## Claims

1. Composite, obtainable by hot pressing or vacuum bagging a multilayer of prepregs of reinforcing webs impregnated with duroplastic resin systems, wherein at least one layer of an epoxy resin prepreg and at least one layer of a prepreg comprising a curing agent and/or an adduct of an epoxy resin and a curing agent.

2. Composite according to claim 1, characterized in that the epoxy resins have been based on reaction products of epichlorohydrin with bisphenol A, bisphenol F, or higher functional novolacs of phenol, cresols, xylenols and longer chain alkyl phenols, such as p-tert butylphenol or nonylphenol.

3. Composite according to claims 1 and 2, characterized in that as curing agent a polyamine is used, selected from aliphatic, cycloaliphatic, aromatic and araliphatic polyamines having from 2 to 18 carbon atoms.

4. Composite according to claim 3, characterized in that aliphatic or cycloaliphatic polyamines are used.

5. Composite according to claims 1-4, characterized in that the ratio between the equivalents of epoxy groups and aminogroups in the adduct is adjusted to reach a prereaction of from 10 to 80 mol% of the available amino groups with the epoxy resin.

6. Composite according to claim 5, characterized in that 20 to 50 mol% of the available amino groups have prereacted with epoxy resin.

7. Prepreg, comprising a porous glass web, glass mat, carbon fibre web or aramid fibre web and a curing agent and/or an adduct of an epoxy resin and a curing agent.

8. Prepreg according to claim 7, characterized in that it comprises a porous glass web and an adduct of an epoxy resin, based on the reaction products of epichlorohydrin with bisphenol A, bisphenol F, or higher functional novolacs of phenol, cresols, xylenols and longer chain alkyl phenols, and aliphatic, aromatic, araliphatic or cycloaliphatic polyamines, having from 2 to 18 carbon atoms and preferably aliphatic or cycloaliphatic polyamines.

9. Prepreg according to claims 7 and 8, characterized in that the ratio between the equivalents of epoxy groups and amino groups in the adduct is adjusted to reach a prereaction of from 10 to 80% of the available amino groups with the epoxy resin.

10. Prepreg, comprising a porous glass web, glass mat, carbon fibre webs or aramide fibre web, and an epoxy resin substantially free of any curing agent.
